# FASCICULE DE BREVET EUROPEEN

(11) **EP 1 754 162 B1**
(45) Date de publication et mention de la délivrance du brevet: **26.06.2013**
(21) Numéro de dépôt: 05762623.6
(22) Date de dépôt: 04.05.2005
(51) Int. Cl.: G06F 13/40

(54) **PROCÉDÉ ET DISPOSITIF DE GESTION D'UN BUS**
VERFAHREN UND VORRICHTUNG ZUR BUSVERWALTUNG
METHOD AND DEVICE FOR MANAGING A BUS

(30) Priorité: 07.05.2004 FR 0450884
(43) Date de publication de la demande: 21.02.2007
(73) Titulaire: Z124, Grand Cayman (KY)
(72) Inventeur: BOURRIER, Pascal, F-75009 Paris (FR); DE CARVALHO, Paul, F-31170 Tournefeuille (FR)
(74) Mandataire: Tolfts, Pippa Helen
(86) Numéro de dépôt international: PCT/FR2005/050301
(87) Numéro de publication internationale: WO 2005/111822

(56) Documents cités:
- US-A- 4 675 808
- US-A- 5 664 140
- US-A- 5 781 747
- US-A- 5 880 982

## Description

L'invention concerne un procédé et dispositif de gestion d'un bus, par constitution d'un ensemble de valeurs accessibles en parallèle, au moyen d'un nombre réduit de lignes, par exemple pour réaliser un bus d'adresse d'un dispositif à mémoire.

Dans l'exemple d'une mémoire semiconducteur, celle-ci comporte séparément un bus de données et un bus d'adresse. Cette dernière comprend un ensemble de lignes parallèles d'adresse, par lesquelles un mot binaire peut être exprimé pour préciser une adresse spécifique d'accès en lecture ou en inscription. Chaque ligne d'adresse correspond à un rang spécifique du mot binaire. Ainsi, avec une adresse en parallèle, l'état instantané d'un bus d'adresse à n lignes d'adresse (où n est un entier) permet de sélectionner une adresse parmi 2ⁿ.

Le développement des capacités des mémoires fait accroître corrélativement le nombre n de lignes d'adresse nécessaires pour accéder à tous les emplacements de stockage possibles. A titre indicatif, une mémoire de 2 MO (Méga octets), soit 16 Méga bits, nécessite un bus d'adresse de 11 lignes pour un mode de fonctionnement sur un octet à accès sur un cycle, et une mémoire de 4 GO nécessite 32 lignes d'adresse en pareil cas.

L'évolution de la miniaturisation des produits qui intègrent des mémoires importantes, comme les téléphones mobiles, les assistants numériques personnels, etc., n'est pas compatible avec l'utilisation d'un bus d'adresse comportant de nombreuses lignes d'adresse parallèles. En effet, cela crée en premier lieu des problèmes de connectique, puisque chaque ligne d'adresse doit être reliée physiquement à un plot de connexion, généralement en périphérie de la puce contentant la mémoire. Il s'ajoute à cela des problèmes de support physique des pistes conductrices du bus, notamment en ce qui concerne la place occupée et les interférences électriques et électromagnétiques importantes entre les pistes lorsque celles-ci sont nombreuses et rapprochées, surtout lorsque les fréquences de cycles sont très élevées. Par ailleurs, chaque ligne étant consommateur de courant, leur démultiplication est coûteuse en terme d'énergie, surtout pour des applications embarquées.

Il a déjà été proposé dans le document US-A-4 644 469 des techniques de double conversion parallèle-série, série-parallèle visant à permettre d'accéder à 2ⁿ adresses d'une mémoire avec un bus d'adresse au nombre L de lignes parallèles inférieur à n. L'approche est basée sur l'hypothèse que dans un mode d'accès systématique à la mémoire, les états des lignes de poids fort (i.e. celles qui expriment les puissances de 2 les plus élevées des composantes du nombre binaire) varient moins fréquemment que les états des lignes de poids faible. Partant de là, il est proposé de réserver aux lignes de poids faible une adresse normale, en mode parallèle, mais de pratiquer la double conversion précitée pour les lignes de poids fort. La démarcation entre les lignes de poids faible et de poids fort est fixe. Pour les lignes de poids fort, une conversion parallèle-série est effectuée en tête du bus, notamment en sortie du processeur qui commande les adresses. Les bits de poids forts sont alors véhiculés sur un seul conducteur à côté des conducteurs parallèles des bits de poids faible. La conversion série-parallèle est effectuée soit juste en amont de la mémoire, dans lequel cas celle-ci peut garder un brochage classique avec n broches d'adresse, soit au sein de la mémoire. Dans ce dernier cas, la mémoire présente un nombre réduit de connexions au bus d'adresse, moyennant des éléments de circuit pour réaliser la conversion série-parallèle en interne.

Le convertisseur série-parallèle du côté de la mémoire mémorise les sorties parallèles de conversion et les présente en tant que bits de poids fort respectifs de la partie haute de l'adresse. Lorsque le contenu des sorties parallèles doit être modifié pour suivre une évolution de l'adresse qui implique au moins un bit de poids fort, une commande est transmise au convertisseur série-parallèle sur une ligne spécifique du bus. En réponse, la mémoire se met en attente durant le chargement des bits série et leur apparition sur les sorties parallèles du convertisseur. A chaque cycle de conversion réalisé pour faire évoluer la partie haute de l'adresse, tous les bits de poids fort sont systématiquement transférés en série et convertis. On note donc que la conversion nécessite un nombre fixe de cycles d'horloge, qui est en fonction directe avec le nombre de lignes de poids sujettes à la conversion série-parallèle, et durant laquelle la mémoire est hors service.

Cette approche rigide n'est pas optimale, car elle impose un retard qui est lié non pas au nombre de bits à modifier lors d'une mise à jour de la partie haute de l'adresse, mais au nombre total de bits de la partie haute de l'adresse.

A titre indicatif, si 16 lignes de poids fort sont sujettes à la double conversion, et seulement le contenu du bit accessible en seizième position du convertisseur série-parallèle nécessite d'être rafraîchi, le temps mort à l'adresse sera d'au moins 16 cycles (sans compter les cycles de signalisation), même si le changement d'état logique n'implique qu'une seule de ces lignes.

Une autre technique connue par le document EP-A-0 628 916 vise à réduire le nombre total de lignes de connexion d'une mémoire, en proposant un bus multiplexé pour les bits d'adresse et de données, permettant notamment de réduire le nombre de terminaux externes d'une mémoire. Cette approche nécessite un contrôleur de multiplexage et de démultiple xage complexe, et impose une diminution systématique est importante de la vitesse d'accès à la mémoire.
Au vu de qui precede, l'invention propose, selon un premier aspect, un. Procédé pour accéder à une cellule mémoire d'un plan mémoire (2) via une adresse mémoire, l'adresse mémoire comprenant un nombre N_{B} d'un ensemble de valeurs (A0-A19) constituées sur N_{B} lignes conductrices parallèles d'un générateur d'adresses (4) au moyen d'un bus d'adresse réduit (6) comprenant un nombre N_{LPP} de lignes conductrices (6-1, 6-2 ; 6-3 ; 6-4), où NLPP est supérieur à 1 et inférieur à N_{B}, le procédé comprenant :
- l'association de chacun des N_{B} bits à l'un d'une pluralité de sous-ensembles de valeurs (A0 - A3, A4 - A7, A8 - A12, A13 - A15, A16 - A19), de telle sorte que chaque sous-ensemble de valeurs est associé à un nombre de bits de l'adresse mémoire qui est entre 1 et N_{LPP},
- la transmission sur au moins l'une des lignes conductrices (6-1, 6-2 ; 6-3 ; 6-4) d'un signal logique indiquant la transmission du premier sous-ensemble (A4-A7) de l'adresse mémoire,
- la transmission du premier sous-ensemble de valeurs (A4-A7) en parallèle sur les lignes conductrices (6-1-6-4) à l'un d'une pluralité de moyens de mémorisation intermédiaires (12), chacun configuré pour mémoriser une partie des N_{B} bits (A0-A19) correspondant à l'un des sous-ensembles de valeurs, et
- la fourniture au plan mémoire (2) d'au moins une partie des N_{B} bits (A0-A19) de l'adresse mémoire via un ensemble de connexions parallèles entre la pluralité de moyens de mémorisation intermédiaires (12) et le plan mémoire (2).

Avantageusement, la transmission sur les lignes conductrices (6-1, 6-2 ; 6-3 ; 6-4) d'un deuxième sous-ensemble (A0-A3) des bits (A0-A19) de l'adresse mémoire, par présentation directe du deuxième sous-ensemble de valeurs (A0-A3) sur les lignes conductrices respectives (6-1-6-4) au plan mémoire (2).

Le procédé peut comprendre le deuxième sous-ensemble de valeurs (A0-A3) de l'adresse mémoire comprend les bits de plus faibles poids de l'adresse mémoire.

Le procédé peut comprendre les étapes suivantes :
- charger ledit premier sous-ensemble de valeurs (A4-AI9) dans des moyens de mémorisation (12) selon un protocole préétabli, en utilisant les lignes conductrices (6-I-6-4),
- présenter directement le deuxième sous-ensemble de valeur(s) en utilisant des/les lignes conductrices respectives (6-1-6-4).

Le procédé peut comprende une gestion des moyens de mémorisation (12) par blocs (12-I-12-4) d'au moins une valeur, et comprend en outre les étapes de :
- déterminer, pour chaque bloc, si la/chaque valeur déjà mémorisée (Ai) est égale à la valeur qui doit correspondre dans l'ensemble de valeurs à constituer,
- dans l'affirmatif, maintenir le bloc en l'état, sans chargement de données,
- dans le cas contraire, charger dans le bloc la/les valeurs qui doit/doivent correspondre, au moyens de la/les ligne(s) conductrice(s) (6-1-6-4) selon le protocole préétabli, en utilisant les lignes conductrices (6-1-6-1).

Dans un mode de réalisation, le côté source signale au côté destination l'identification du/des blocs, dont le contenu doit faire l'objet d'une mise à jour, par un seul message durant un premier cycle, le nombre de lignes étant au moins égal au nombre de blocs de mémorisation en quels sont décomposées les valeurs du sous-ensemble,
et, du côté source, chaque bloc respectif peut être attribué à une ligne particulière selon un code de correspondance connu au niveau du côté source et du côté destination, la désignation d'un bloc étant signalée par un signal sur une ligne conductrice spécifiquement attribuée à ce bloc.

Le côté source peut transmettre via les lignes conductrices/la ligne conductrice les/la valeur(s) destinée(s) à être chargée(s) dans chaque/le bloc identifié, afin d'actualiser ledit sous ensemble de valeurs, en utilisant un cycle de transmission de valeur(s) par bloc, selon un ordonnancement préétabli des cycles, par lequel le côté destination identifie le bloc destinataire de la valeur/des valeurs présente(s) sur les lignes conductrices/la ligne conductrice en fonction du cycle.

Une mise à jour de l'ensemble de N_{B} valeurs (AO-A19) accessibles en parallèle peut être effectuée par les cycles successifs suivants:
- un premier cycle comprenant :
   - l'identification par le côté source du/des bloc(s) comportant au moins une valeur à changer pour la mise à jour, et
   - le signalement au côté destination, durant un premier cycle de mise à jour, du/des bloc(s) comportant au moins une valeur à changer pour la mise à jour, au moyen des lignes conductrices parallèles/ de la ligne conductrice,
- suivi d'un cycle pour le ou chaque bloc identifié, comprenant:
   - la transmission par le côté source de la valeur/l'ensemble des valeurs destinées au bloc, au moyen des lignes conductrices parallèles/ de la ligne conductrice,
   - au niveau du côté destination, le transfert et le chargement dans le bloc de mémorisation identifié, des valeurs transmises, et
- suivi d'un cycle comprenant la transmission sur les lignes conductrices parallèles/la ligne conductrice des valeurs/de la/des valeur(s) complémentaire(s) au sous-ensemble, de sorte à constituer l'ensemble complet des N_{B} valeurs accessibles en parallèle, les valeurs du sous-ensemble étant accessibles en parallèle en sortie des blocs de mémorisation du côté destination, et les valeurs/la valeur complémentaire(s) au sous-ensemble étant présentée(s) directement sur les lignes conductrices respectives/la ligne conductrice.

Dans le mode de réalisation:
- le nombre de blocs de mémorisation est égal au nombre N_{LLP} de lignes conductrices parallèles, et
- le nombre de lignes de mémorisation par bloc est égal au nombre N_{LLP} de lignes conductrices parallèles.

Les N_{B} valeurs peuvent être des éléments binaires qui constituent collectivement un nombre binaire de N_{B} bits, ledit sous-ensemble de valeurs pouvant constituer les bits de poids fort du nombre binaire.

Les valeurs de l'ensemble peuvent être utilisées en tant qu'adresse parallèle d'une mémoire.

Dans le mode de réalisation, les conductrices /la ligne conductrice constitue(nt) l'intégralité des lignes parallèles d'un bus/l'intégralité d'un bus utilisé(es) pour transmettre le nombre binaire de N_{B} bits.

L'invention et les avantages qui en découlent seront mieux compris à la lumière de la description des modes de réalisation préférés qui suit, donnée purement à titre indicatif et non-limitatif, par référence aux dessins annexés, dans lesquels:
- la figure 1 est un schéma de principe d'un mode de réalisation appliqué à une mémoire, permettant de comprendre les principes mis en oeuvre conformément à l'invention,
- les figures 2a et 2b sont des organigrammes des étapes du déroulement du processus de gestion des adresses de la mémoire dans le cadre du mode de réalisation
   de la figure 1, la figure 2b étant plus particulièrement une routine exécutée à la suite de l'organigramme de la figure 2a lorsqu'il y a une évolution des bits de poids fort de l'adresse,
- la figure 3 est un exemple d'une première possibilité de mise en oeuvre du mode de réalisation de la figure 1, pour ce qui concerne les moyens de gestion du côté de la mémoire (côté serveur), où ces moyens sont matériellement intégrés au composant contenant la mémoire, et
- la figure 4 est un exemple d'une deuxième possibilité de mise en oeuvre du mode de réalisation de la figure 1, pour ce qui concerne les moyens de gestion du côté de la mémoire (côté serveur), où ces moyens sont matériellement dissociés du composant contenant la mémoire.

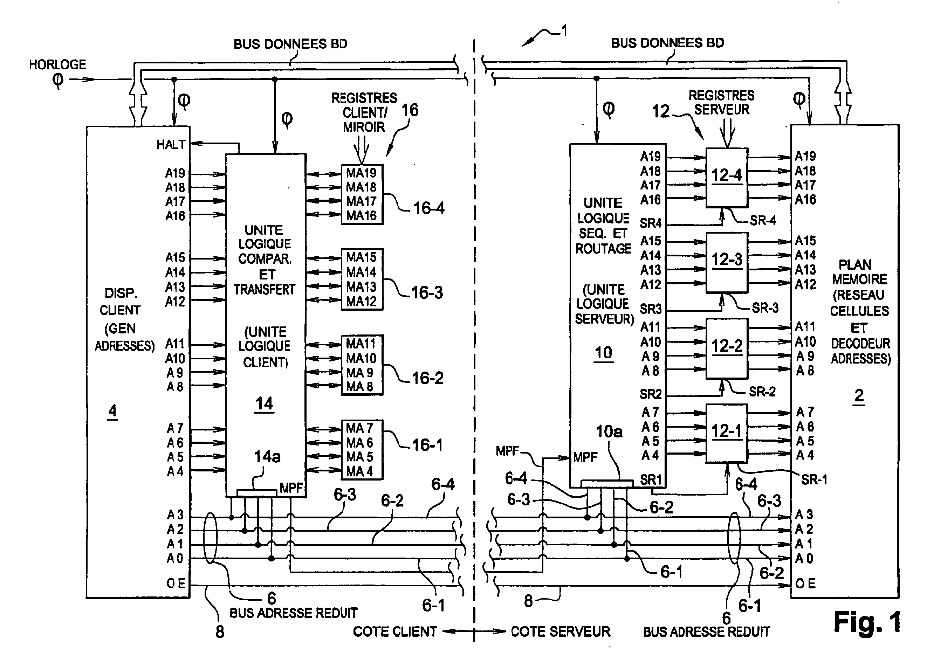

Ainsi que le montre la figure 1, le mode de réalisation de l'invention est basée sur une application 1 qui utilise un plan mémoire 2, comprenant un réseau de cellules mémoire et un décodeur d'adresses. Les adresses sont transmises par un dispositif client (générateur d'adresses) 4, qui peut être une unité centrale (CPU), un dispositif d'accès direct à la mémoire (connu par l'acronyme anglais DMA pour "direct memory access"), ou autre. Dans l'exemple, le décodeur d'adresses du plan mémoire 2 présente 20 entrées parallèles d'adresse A0 à A19, permettant de sélectionner 2²⁰ adresses différentes, où A0 est le bit le plus faible et A19 est le bit le plus fort. Le plan mémoire 2 est réceptif à une adresse lorsque son entrée de validation OE est actif (OE=1). Les adresses évoluent sur des cycles d'une horloge ϕ de cadencement.

Les données vers et du plan mémoire transitent par un bus de données BD à part.

Conformément à l'invention, les valeurs des adresses A0 à A19 sont fournies depuis le dispositif générateur d'adresses 4 par un bus adresse 6 qui comporte un nombre de lignes d'adresse - en l'occurrence quatre - inférieur au nombre de bits d'adresse, d'où sa désignation de "bus adresse réduit". Chaque ligne est constituée par un conducteur électrique respectif de signal binaire, physiquement réalisé par des techniques classiques de métallisation. La longueur du bus 6 est arbitraire, dépendant de la séparation entre dispositif client 4 et le plan mémoire 2, lesquels peuvent être relativement éloignés.

Le signal de validation OE est fourni au plan mémoire à partir du dispositif client 4 sur une ligne à part 8.

Dans ce qui suit, on désigne "côté client" l'extrémité du bus adresse réduit 6 située au niveau du dispositif client 4, et "côté serveur" l'extrémité opposée de ce bus adresse située au niveau du plan mémoire 2. (Le générateur d'adresses est considéré comme "client" en ce sens qu'il demande l'accès à la mémoire aux adresses qu'il lui fournit ; la mémoire est considérée comme un serveur, en ce sens qu'elle émet les données stockées aux adresses qui lui sont transmises (en mode lecture), et (en mode inscription, dans le cas d'une mémoire inscriptible) réceptionne des données aux adresses qui lui sont transmises.)

Les quatre conducteurs électriques 6-1 à 6-4 du bus d'adresse réduit ont une double fonction :
i) en mode évolution bits poids faible seulement : servir de lignes parallèles respectives des quatre bits de poids les plus faibles, les lignes 6-1 à 6-4 étant câblées respectivement aux connexions des bits d'adresse A0 à A3 du plan mémoire ; et
ii) en mode évolution bits poids fort : véhiculer des signaux logiques permettant de faire évoluer les valeurs des adresses A4 à A19 de poids fort ("poids fort" relativement aux adresses A0-A3) aux entrées parallèles respectives du plan mémoire.

En raison de leur double fonction, les lignes 6-1 à 6-4 sont désignées également par le terme "ligne(s) polyvalente(s)".

Pour assurer la fonction en mode évolution poids fort, les lignes 6-1 à 6-4 sont en outre connectées, au côté serveur, à une entrée 10a sur quatre plots d'une unité logique 10 de séquencement et de routage, programmée en logique câblée. Cette unité, désignée dans ce qui suit "unité logique serveur", constitue une machine d'états qui permet de produire les valeurs des bits d'adresse A4 à A19 et de les fournir au plan mémoire 2 via quatre registres 12-1 à 12-4, désignés globalement par le terme "registres serveurs" 12. Les états successifs de l'unité logique serveur 10 évoluent sur des cycles d'une entrée d'horloge ϕ qui est synchronisée avec les phases de l'application 1.

Chaque registre serveur gère un bloc de quatre lignes parallèles d'adresse selon l'attribution suivante : registre 12-1 : lignes A4 à A7, registre 12-2 : lignes A8 à A11, registre 12-3 : lignes A12 à A15, et registre 12-4 : lignes A16 à A19. A cette fin, chaque registre comporte quatre lignes parallèles de mémorisation, chacune d'un élément binaire. Chaque ligne de mémorisation a une entrée de donnée reliée à une sortie respective de l'unité logique serveur 10 et une sortie qui verrouille cette donnée, reliée à la ligne d'adresse correspondante du plan mémoire 2. Un registre est actif pour verrouiller les quatre états logiques présentés sur l'ensemble de ses quatre lignes d'entrée lorsque son entrée de positionnement (désigné SR-1 à SR-4 respectivement pour les registres 12-1 à 12-4) est à l'état logique 1. (Cette entrée est aussi connue par entrée "set" en terminologie anglo-saxonne.) Ces entrées de positionnement SR-1 - SR4 sont pilotées individuellement par l'unité logique serveur 10, sur des sorties respectives de celle-ci. Lorsque l'entrée de positionnement est à l'état logique 0 pour un registre, les quatre sorties de ce dernier sont maintenues bloquées à l'état mémorisé à la dernière mise à jour, quel que soit le contenu binaire présenté ultérieurement en entrée des quatre lignes de mémorisation.

Les valeurs d'adresse poids fort sont programmées dans les registres serveur 12 durant un mode de fonctionnement désigné "mode évolution bits poids fort". Ces valeurs d'adresse sont alors obtenues en fonction de motifs de bits présentés à l'entrée 10a depuis les lignes conductrices polyvalentes 6-1 à 6-4 durant des cycles successifs de l'horloge ϕ de cadencement, selon les règles suivantes qui régissent les cycles de programmation des registres 12 :
1.1) Mise en mode évolution bits poids fort. Ce mode est signalé à l'unité logique client 10 par un signal logique MPF (MPF=1) sur une ligne associée au bus 6. En variante, le mode évolution bits poids fort peut être signalé uniquement par le positionnement du signal OE à OE=0, si cela n'interfère pas avec d'autres mémoires reliées à la ligne 8 qui véhicule ce signal ;
1.2) Cycle initial de sélection de registre(s). Chaque ligne polyvalente 6-1 à 6-4 du bus désigne l'un des registres selon l'attribution suivante : registre 12-1 : ligne 6-1, registre 12-2 : ligne 6-2, registre 12-3 : ligne 6-3, et registre 12-4 : ligne 6-4.
   1.2.1) Un état logique 1 sur une ligne polyvalente indique que le contenu du registre qui lui est attribué doit être mis à jour ; un état logique 0 sur cette ligne indique que le contenu du registre correspondant reste inchangé pour l'intégralité des quatre lignes de mémorisation de ce dernier. On note qu'un registre ou plusieurs, voire tous, peut/peuvent être désigné(s) ainsi pour une mise à jour. L'unité logique serveur 10 analyse l'état logique sur chacune des lignes 6-1 à 6-4 à son entrée 10a, et identifie ainsi le, ou chaque, registre désigné pour une mise à jour de son contenu.
   1.2.2.) Si plusieurs registres sont désignés, l'unité logique serveur 10 prévoit l'ordre dans lequel les registres doivent être mis à jour. Dans l'exemple, cet ordre obéit l'ordre de priorité suivant : registres 12-1, 12-2, 12-3 puis 12-4. La mise à jour s'effectue donc d'abord sur les registres ayant les bits les moins forts.
   1.2.3.) A la fin du cycle initial supra, l'unité logique serveur 10 sélectionne le registre désigné à mettre à jour (cas d'un seul registre à mettre à jour), ou le premier registre à mettre à jour (cas de plusieurs registres à mettre à jour) selon l'ordre précité. Cette sélection s'opère par la mise à l'état logique 1 de l'entrée de positionnement ("set") du registre sélectionné, les autres entrées de positionnement étant mises à l'état logique 0.
1.3.) Cycle(s) de programmation d'un registre désigné. Ce cycle suit immédiatement le cycle de sélection de registres.
   1.3.1) Les états logiques présents en parallèle sur les quatre lignes polyvalentes 6-1 à 6-4 du bus deviennent alors les quatre valeurs logiques que l'unité logique serveur 10 transfert depuis son entrée 10a aux quatre lignes d'entrée respectives du registre sélectionné, selon les attributions suivantes : ligne 6-1 : ligne d'entrée de poids le plus faible (du registre désigné), ligne 6-2 : ligne d'entrée du deuxième poids le plus faible, ligne 6-3 : ligne d'entrée du deuxième poids le plus fort, ligne 6-4 : ligne d'entrée du poids le plus fort. Ensuite, l'entrée de positionnement du registre sélectionné est remise à l'état 0 pour verrouiller les états logiques venant d'y être inscrits.
   1.3.2.) Si plusieurs registres ont été sélectionnés au cycle de sélection de registre(s), le cycle de programmation est effectué selon la règle 1.3.1.) successivement pour chaque registre sélectionné.

A la fin du ou des cycle(s) de programmation de registre(s), l'ensemble des valeurs des lignes d'adresse A4 à A19 en sortie des registres 12-1 à 12-4 est à jour. Le mode évolution bits poids forts est alors terminé et le signal MPF passe à MPF=0.

Ensuite, les lignes polyvalentes 6-1 à 6-4 signalent, conformément au mode évolution bits poids faible seulement, les valeurs logiques actuelles des bits de poids faible A0 à A3. L'ensemble des bits d'adresse A0 à A19 est alors actualisé en entrée du plan mémoire 2.

On note que le processus du mode évolution bits poids fort utilise un nombre variable de cycles pour réaliser la mise à jour des bits de poids forts, ce nombre étant égale au nombre de registres concernés par la mise à jour, augmenté de un (pour le cycle de sélection). Il n'y a donc pas de cycles superflus comme cela pourrait être le cas dans une approche de ré- inscription systématique des données de tous les registres à chaque évolution d'état intervenant sur le motif des bits de poids fort.

En mode évolution bits poids forts, le séquencement et la sortie des données nécessaires sur les lignes parallèles polyvalentes 6-1 à 6-4, ainsi que des signaux MPF et OE précités, sont assurés par une unité logique client 14, dite de comparaison et de transfert. Cette unité, située du côté client du bus 6, constitue une machine d'états réalisée en logique câblée, à l'instar de l'unité serveur 10. Les états successifs de l'unité logique client 14 évoluent en synchronisme avec le signal d'horloge ϕ précité, appliqué à son entrée. L'unité client 14 reçoit en entrée directement toutes les lignes de sortie d'adresse de poids fort A4 à A19 du dispositif client 4. A partir de ces données, elle produit en sortie :
- d'une part des signaux logiques destinés à un ensemble de quatre registres, dits registres client 16-1 à 16-4, chacun comportant un bloc de quatre lignes parallèles de mémorisation. Les 16 lignes de mémorisation au total mémorisent les valeurs, désignées MA4 à MA19, des adresses de poids fort (respectivement A4-A19) à la dernière mise à jour des adresses (ou de la première adresse exprimée au démarrage). Les quatre registres client 16-1 à 16-4 (désignés génériquement 16) sont analogues, et appariés, respectivement aux quatre registres serveur 12-1 à 12-4, et mémorisent les mêmes états logiques aux extrémités respectives du bus 6. Pour cette raison, les registres client 16-1 à 16-4 sont considérés comme les registres miroirs des registres serveur 12-1 à 12-4 respectifs. (Par souci de simplification du schéma de principe, les lignes d'accès aux registres client 16 sont représentées comme étant bidirectionnelles, chaque ligne servant fonctionnellement à l'inscription d'une donnée et à la lecture de cette donnée.) ; et
- d'autre part les signaux bgiques destinés à chacune des lignes parallèles polyvalentes 6-1 à 6-4 du bus d'adresse réduit, durant le mode évolution bits poids forts, et aussi les signaux logiques destinés aux lignes de signaux MPF et OE. En outre, l'unité logique client 14 émet un signal HALT à destination du dispositif client 4. Ce signal est actif (HALT=1) en mode évolution bits poids forts pour inhiber la sortie de nouvelles adresses depuis dispositif client.

Pour produire ces signaux logiques destinés à chacune des lignes parallèles polyvalentes 6-1 à 6-4 du bus d'adresse réduit, l'unité logique client 14 comprend un ensemble de quatre connexions de sortie 14a, chaque connexion étant câblée à une ligne parallèle polyvalente respective. Ces sorties 14a peuvent forcer un état logique sur les lignes parallèles polyvalentes 6-1 à 6-4 durant le mode évolution bits poids fort. En effet, dans ce mode, lorsque HALT=1, les connexions des sorties A0 à A3 du dispositif client 4 sont orientées sur des états de haute impédance, grâce à un multiplexeur (non représenté).

Par contre, les sorties 14a de l'unité logique client se positionnent à un état de haute impédance en mode évolution bits poids faible seulement (HALT=0), afin de ne pas influencer les états logiques des bits d'adresse qui sont alors normalement produits aux sorties A0 à A3 du dispositif client d'adresses 4. De la sorte, en mode évolution bits poids faible seulement, le dispositif client d'adresses 4 peut émettre directement sur les ligne parallèles polyvalentes 6-1 à 6-4 les signaux d'adresse A0-A3 aux entrées correspondante A0-A3 du plan mémoire 2, sans perturbation par les sorties 14a de l'unité logique client 14.

Le fonctionnement de l'unité logique client 14 est basé sur les règles suivantes :
2.1) Instauration du mode évolution bits poids fort. Ce mode est instauré si, lors d'un nouveau cycle d'adresse commandé par le dispositif client 4, au moins une ligne de poids fort A4-A19 en sortie de ce dernier change de valeur logique par rapport à celle du cycle d'adresse précédant. Les registres client 16 servent à détecter un tel changement, par comparaison entre la valeur MAi stockée et la valeur de la nouvelle adresse Ai en sortie du dispositif client 4, pour i=4 à i=19. Les valeurs des signaux A4 à A19 lues directement en sortie du dispositif client 4 pour réaliser cette comparaison sont verrouillées sur les entrées de l'unité logique client 14. De la sorte, celle-ci peut ensuite inhiber les sorties d'adresses de l'unité client 4, en émettant le signal HALT=1, sans perdre les valeurs A4 à A19 de la nouvelle adresse. Ces nouvelles valeurs peuvent alors être utilisées durant les cycles ultérieurs de mise à jour.
   2.1.1.) Si un changement est ainsi détecté, l'unité logique client 14 instaure le mode évolution bits poids fort en inscrivant les états logiques : MPF=1, OE=0. Ces états sont maintenus pendant toute la durée du mode évolution bits poids fort. Dans le cas contraire, l'unité logique client maintient, ou instaure, le mode évolution bits poids faible seulement en maintenant ou en inscrivant les états logiques MPF=0, OE=1.
2.2) Déroulement du mode évolution bits poids fort. Une fois que le mode évolution bits poids fort est instauré, l'unité logique client 14 produit sur les lignes parallèles polyvalentes 6-1 à 6-4 du bus l'état/les états logique(s) de sélection du/des registre(s) serveur à mettre à jour, conformément au protocole de désignation précisée par les règles 1.2.1. et 1.2.2. supra. Cette inscription est effectuée durant le cycle d'adresse auquel se produit le changement dans les valeurs d'adresses parmi les lignes de poids fort A4-A19.
   2.2.1.) Au cycle d'horloge suivant, l'unité logique client 14 produit sur les lignes parallèles polyvalentes 6-1 à 6-4 du bus les valeurs binaires qui doivent être transférées pour la mise à jour du registre serveur 12-j (1≤j≤4) sélectionné par l'unité logique serveur 10. Pour ce faire, l'unité logique client 14 utilise la règle 1.3.1.) supra de correspondance entre les lignes et les entrées de registre pour respecter l'ordonnancement des données du côté client et du côté serveur.
   2.2.2.) En parallèle, l'unité logique client 14 inscrit, dans celui 16-j des registres client qui est le miroir du registre serveur 12-j sélectionné selon la règle 2.2.1.) supra, les mêmes valeurs binaires que celles qui viennent d'être transférées vers ce registre serveur sélectionné 12-j. De la sorte, le registre serveur sélectionné 12-j et le registre client 16-j qui lui est son miroir ont les mêmes valeurs mises à jour pour les lignes d'adresse de poids fort qui leur sont attribuées.
   2.2.3.) Si la mise à jour parmi les bits adresse de poids fort A4-A19 concerne plusieurs registres, l'unité logique 14 répète au cycle transfert et de mise à jour du registre client 16-j correspondant, en répétant le processus décrit dans le cadre des règle 2.2.1.) et 2.2.2.) supra.
      Les données ayant été inscrites sur les lignes parallèles polyvalentes 6-1 à 6-4 sont lues par l'unité logique serveur 10 pour la mise à jour des registres serveur 12, comme expliqué surpra, dans l'ordre de mise à jour précisé. Cette règle 2.2.3.) est répétée autant de fois que nécessaire jusqu'à ce que tous les registres (client et, par conséquent, serveur) nécessitant une mise à jour soient traités.
   2.2.4.) A l'issu du processus de la règle 2.2.3.) supra, l'unité logique client 14 bascule du mode évolution bits poids forts au mode évolution bits poids faible seulement, en inscrivant les états logiques MPF=0, OE=1 et HALT=0. A la transition du signal HALT de 1 à 0, le dispositif client d'adresses 4 reproduit aussitôt sur ses sorties d'adresse A0 à A19 les valeurs présentes juste avant l'inhibition. On retrouve alors les valeurs actuelles des adresses de poids faible A0 à A3 sur les lignes polyvalentes respectives 6-1 à 6-4 du bus, celles-ci remplissant alors le rôle de lignes parallèles d'adresse A0 à A3 de poids faible pour le plan mémoire 2. Les sorties 14a de l'unité logique client 14 n'émettent alors pas de signal et présentent une haute impédance.

On remarque que si M est le nombre de registres nécessitant une mise à jour (1 ≤ M ≤ 4), le nombre de cycles occupé par le mode évolution bits poids forts est M+1. A l'issu de ce mode, les registres serveur 12 présentent les valeurs A4-A19 à jour aux connexions d'entrée d'adresse correspondantes du plan mémoire 2, et de même les lignes polyvalentes 6-1 à 6-4 présentent les valeurs A0 à A3 actuelles aux connexions d'entrée adresse correspondantes du plan mémoire.

Tant qu'une nouvelle adresse produite par le dispositif client 4 n'implique pas de changement de valeurs des bits adresse de poids fort A4-A19, les registres serveur 12 continueront à présenter les bonnes valeurs aux entrées adresse A4-A19 du plan mémoire 2. Les différences d'adresse ne sont alors exprimées que par les bits de poids faible A0-A3, dont les évolutions sont communiquées simultanément et directement par les lignes parallèles polyvalentes 6-1 à 6-4 du bus d'adresse réduite.

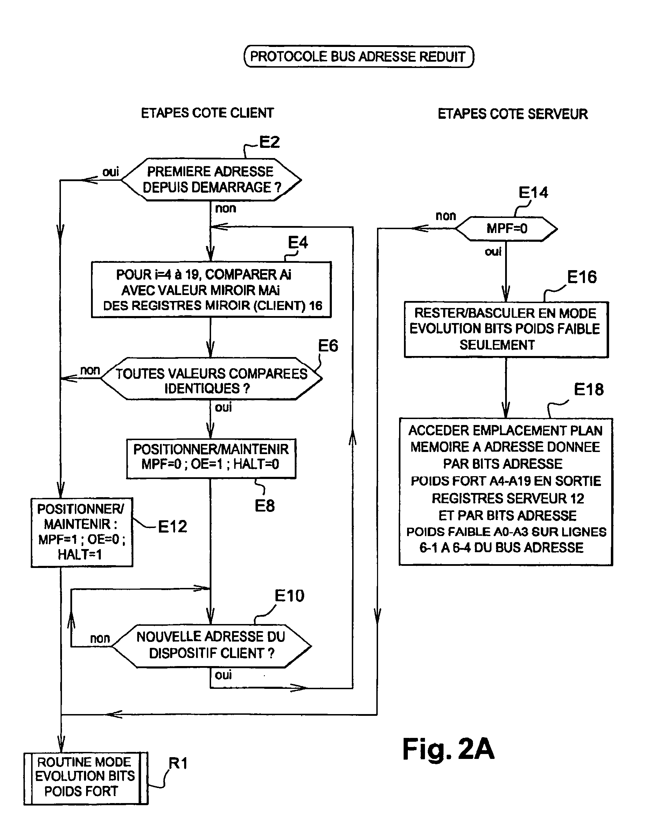

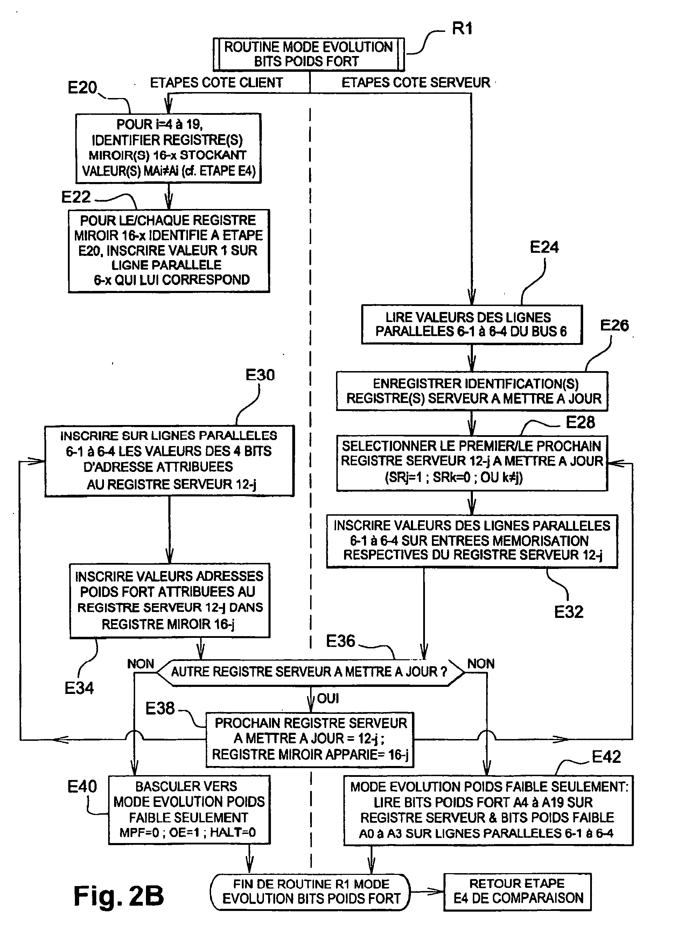

Les figures 2a et 2b sont des organigrammes qui illustrent les processus décrits supra, et qui permettent notamment de suivre les étapes exécutées du côté client et du côté serveur, respectivement aux moitiés gauche et droite des organigrammes. Les étapes qui figurent dans ces organigrammes, étant en grande partie basées sur les explications présentées supra, ne sont décrites que brièvement.

L'organigramme de la figure 2a montre les étapes permettant de décider de la mise en mode évolution bits poids fort. Dans l'exemple, si l'adresse produite par le dispositif client 4 est la première depuis son démarrage (déterminé à l'étape E2), il est prévu de procéder de facto en mode évolution bits poids fort (routine R1). En variante, l'obligation de passer en mode évolution bits poids fort pour le cas d'une première adresse après démarrage peut être levée, notamment s'il est estimé qu'il est relativement probable que cette première adresse n'implique pas une reprogrammation des registres serveurs ; on peut alors éviter à ce moment le retard imposé par la routine. Suivant cette variante, le processus commence directement à l'étape E4.

L'étape suivante (ou la première étape dans le cas de la variante supra) E4 comprend la comparaison des valeurs des bits Ai de poids forts A4-A19 de l'adresse courante (nouvelle adresse) indiquée par le dispositif client 4 avec les valeurs correspondantes MAi des registres client (miroirs) 16-1 à 16-4.

Si toutes les paires de valeurs Ai et MAi comparées sont identiques (cf. étape E6), le mode évolution bits poids faible seulement est sélectionné ou maintenu. En conséquence, l'unité logique client 14 positionne/maintient les valeurs des signaux MPF=0 ; OE=1 et HALT=0 (étape E8), et se met en attente d'une nouvelle adresse (nouveau cycle d'adresse) du dispositif client (étape E10). Lorsqu'une nouvelle adresse apparaît, le processus retourne à l'étape E4 de comparaison.

Si au moins une paire de valeurs Ai et MAi comparée n'est pas identique (cf. étape E6), le mode évolution bits poids fort est sélectionné ou maintenu. En conséquence, l'unité logique client positionne/maintient les valeurs des MPF=1 ; OE=0 et HALT=1 (étape E12), et procède à la routine R1 du mode évolution bits poids fort.

En parallèle, l'unité logique serveur 10 surveille l'état du signal MPF (étape E14). Si elle détecte que MPF=0 à la suite de l'étape E8 (par exemple en n'interrogeant la ligne porteuse de ce signal qu'après un laps permettant à l'unité logique client d'avoir exécuté cette étape E8 ou, le cas échéant l'étape E12), elle reste ou bascule en mode évolution bits poids faible seulement (étape E16). Conformément à ce mode, une adresse du plan mémoire 2 est déterminée à partir des bits adresse de poids fort A4 à A19 en sortie des registres serveur 12-1 à 12-4 et des bits adresse de poids faible A0 à A3 sur les lignes parallèles polyvalentes respectives 6-1 à 6-4 du bus adresse réduit 6 (étape E18). Tous les bits adresse A0 à A19 sont alors lus en parallèle par le plan mémoire 2, et au cycle d'apparition de l'adresse actuelle, comme dans un fonctionnement classique.

Si l'unité logique serveur 10 détecte à l'étape E14 que MPF=1, elle procède à la routine R1 précitée.

La routine R1 du mode évolution bits poids fort, présentée à la figure 2b, débute par l'identification, au niveau de l'unité logique client 14, du/des registre(s) miroir(s) (désigné(s)16-x) qui stocke(nt) au moins une valeur MAi≠Ai, où i=4 à 19 et Ai est le bit d'adresse de la nouvelle adresse (étape E20), cette/ces inégalité(s) ayant été détectée(s) et enregistrée(s) lors de l'étape de comparaison E4.

Pour le/chaque registre miroir 16-x identifié à l'étape E20, l'unité logique client 14 inscrit une valeur logique 1 sur la ligne parallèle polyvalente 6-x qui correspond à ce registre (1 ≤ x ≤ 4) (étape E22).

Ensuite, l'unité logique serveur 10 lit ces valeurs des lignes parallèles polyvalentes 6-1 à 6-4 du bus 6 (étape E24) et, à partir de ces informations, enregistre l'identification/les identifications du/des registre(s) serveur à mettre à jour (étape E26).

Elle sélectionne ensuite le registre identifié (cas d'un seul registre serveur identifié), ou le premier registre serveur à mettre à jour (étape S28). Le registre à mettre à jour à cette étape, sélectionné conformément à la règle 1.2.2. supra, porte la désignation 12-j (1 ≤ j ≤ 4). Cette sélection s'opère par les entrées de positionnement SR des registres, en positionnant celle SRj du registre sélectionné à 1, et tous les autres SRk (où k≠j) à 0.

Ensuite, au cycle suivant, l'unité logique client 14 inscrit sur les lignes parallèles polyvalentes 6-1 à 6-4 du bus les quatre valeurs des quatre bits respectifs d'adresse attribuées au registre serveur 12-j (étape E30).

En réponse, l'unité logique serveur 10 lit et inscrit les valeurs des lignes parallèles polyvalentes 6-1 à 6-4 sur les quatre entrées de mémorisation respectives du registre 12-j (étape E32). En même temps, l'unité logique client 14 inscrit dans son registre miroir 16-j, apparié au registre serveur 12-j, les mêmes valeurs d'adresse que celles venant d'être inscrites dans le registre serveur 12-j (étape S34). On note que cette étape d'inscription E34 peut être réalisée à tout moment, jusqu'à la prochaine étape de comparaison E4. L'unité logique client 14 peut aussi inscrire d'emblée toutes les données de mise à jour de l'ensemble de ses registres miroir 16-1 à 16-4 en une seule suite d'opérations, les données à inscrire étant identifiables et accessibles à partir des entrées de la logique client 14 qui reçoivent et verrouillent automatiquement les bits d'adresse A4 à A19 en sortie du dispositif client 4.

S'il y a un prochain registre serveur à mettre à jour (étape d'interrogation E36), ce prochain registre reprend la désignation 12-j, et de même son registre miroir côté client reprend la désignation 16-j (étape E38), et le processus est réitéré en ce qui concerne les étapes E28 à E38. Cette réitération est reprise si nécessaire jusqu'à ce que tous les contenus des registres serveur et miroir soient à jour vis-à-vis des valeurs actuelles d'adresse de poids fort A4 à A19 du dispositif client 4.

A la fin de cette routine R1 du mode évolution bits poids fort, les unités logiques serveur 10 et client 12 se repositionnent automatiquement en mode évolution bits poids faibles seulement. A cette fin, l'unité logique client 14 positionne les valeurs MPF=0 ; OE=1 (réactivation du plan mémoire 2) ; HALT= 0 (réactivation de sorties d'adresses suivantes du dispositif client 4) (étape E40). L'unité logique serveur 10 peut alors laisser le plan mémoire lire les bits adresse de poids fort A4 à A19 depuis les registres serveurs 12-1 à 12-4, et les bits adresse de poids faible A0 à A3 depuis les lignes parallèles polyvalentes 6-1 à 6-4 du bus adresse réduit 6.

Ensuite, le processus retourne à l'étape E4 de comparaison.

On note que les étapes E2 à E8, du côté client, de détermination d'une éventuelle évolution dans les bits de poids fort d'une adresse actuelle présentée et de positionner/maintenir le mode évolution bits poids faible seulement, s'opèrent suffisamment en avance de l'arrivée de l'adresse suivante (étape E10) pour assurer un cadencement normale des cycles d'adresse du plan mémoire lorsque l'on reste dans le mode évolution bits poids faible seulement.

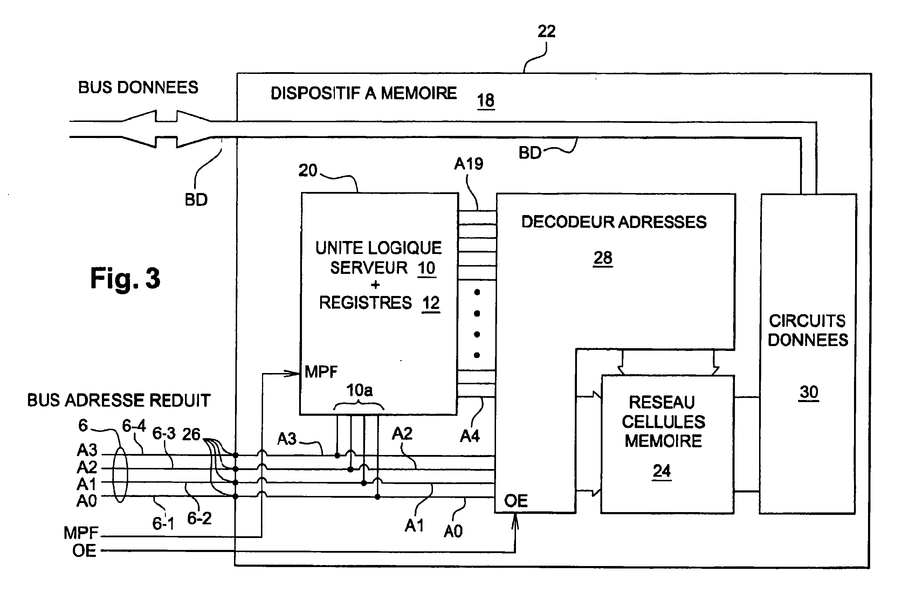

La figure 3 illustre un dispositif à mémoire 18 qui intègre physiquement l'ensemble des moyens matériels côté serveur du mode de réalisation de la figure 1, à savoir l'unité logique serveur 10 et les registres serveur 12. (Ces parties 10 et 12 sont présentées dans un bloc commun 20.)

Dans cet exemple, l'ensemble du dispositif à mémoire 18 est intégré dans une même puce 22. Les connexions externes à cette puce nécessaires à l'adresse du réseau de cellules 24 du plan mémoire 24 se limitent aux lignes parallèles polyvalentes du bus d'adresse réduit 6. Celles-ci étant au nombre de quatre (lignes 6-1 à 6-4) dans l'exemple considéré, seuls quatre plots 26 de connexion sur la puce 22 sont donc nécessaires pour produire 20 lignes parallèles d'adresse A0 à A19 au niveau du décodeur d'adresses 28 de la mémoire. Les connexions des lignes parallèles d'adresse A4 à A19 sont réalisées en interne entre les sorties respectives des registres serveur 12 du bloc 20 et le décodeur d'adresses 28. La connexion externe de la ligne de signal MPF est reliée directement au bloc 20. Comme mentionné supra, cette ligne peut être omise si la ligne du signal OE est spécifique à la mémoire adressée. Dans ce cas, on peut signaler l'interruption de l'adresse et en même temps l'instauration du mode évolution bits poids fort uniquement par ce signal OE. La figure 3 serait alors modifié par la suppression de la ligne de signal MPF, et par une connexion supplémentaire de la ligne OE sur l'entrée MPF, éventuellement avec une inversion logique selon la règle logique employée. On note que pour le cas de figure considéré, avec une gestion d'adresses sur 20 bits parallèles, on économise 15 ou 16 connexions externes, selon que l'on utilise ou pas la ligne dédiée de signal LPF (la ligne 8 de signal OE est généralement prévue dans une gestion classique de mémoire). Si la puce 22 est encapsulée dans un boîtier, le nombre de broches de connexion externes au boîtier serait réduit d'autant.

Pour des raisons de simplicité, la figure ne détaille pas les circuits 30 d'entrée/sorties des données en mémoire et le bus de données BD.

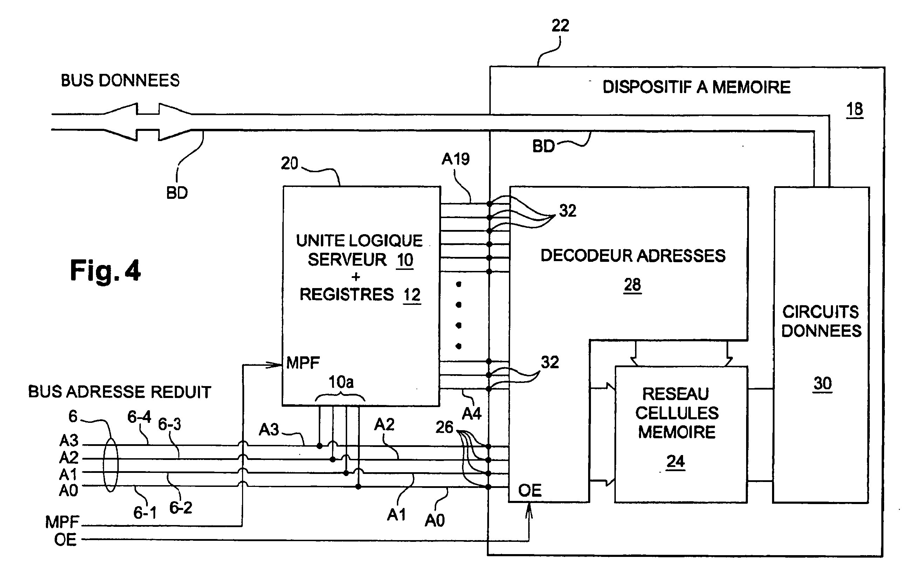

En variante, comme représenté par la figure 4, le bloc 20 comportant l'unité logique serveur 10 et les registres 12 peut être physiquement extérieur au dispositif à mémoire 22. Dans ce cas, il est prévu des plots de connexion supplémentaires 32 au niveau du dispositif à mémoire 18 pour recevoir les sorties des bits d'adresse de poids fort A4 à A19 en provenance du bloc 20. Toutefois, cette variante demeure intéressante du point vu du bus adresse 6 menant jusqu'au bloc 20, ce bus ayant un nombre réduit de lignes 6-1 à 6-1, tout comme dans le cas précédent.

L'invention permet une réduction très importante du nombre de connexions de lignes conductrices, et donc une diminution correspondante des perturbations électriques et électromagnétiques, ainsi que de la consommation d'énergie, dues à ces lignes. Par ailleurs, l'espace gagné par cette réduction est un atout majeur, notamment avec les nouvelles applications embarquées - et donc miniaturisées - fortes consommatrices en mémoire, comme les téléphones mobiles évolués offrant des services multimédias, etc.

Dans une application typique, le principe de la localité des adresses - selon lequel les adresses successives ont fréquemment des valeurs d'adresse également successives ou voisines - est très souvent suivie. Dans ce cas, des suites relativement longues d'adresses appelées n'impliquent que des emplacements d'adresse dans un même bloc, ou sous-group de blocs, de la mémoire. Les bits de poids fort ne servant généralement qu'à désigner un bloc particulier, ou un sous-group de blocs, il s'ensuit que la nécessité d'instaurer le mode évolution bits poids fort sera corrélativement peu fréquente par rapport au nombre d'adresses appelées. Globalement, la vitesse moyenne d'exécution des adresses ne sera alors que peu affectée.

On comprendra que l'unité logique client 14 et/ou l'unité logique serveur 10 peut/peuvent être réalisée(s) selon différentes technologies. Dans l'exemple, ces deux unités sont en logique câblée. Leur construction est basée notamment sur des logiques de sélection, de commutation et de registres à décalage (par exemple pour analyser les états logiques à l'étape E24 supra), et peut être réalisée de diverses manière selon des techniques connues en elles-mêmes. Le nombre d'éléments logiques nécessaires pour les réaliser est faible comparativement au nombre de transistors présents dans une mémoire typique. Il est donc relativement aisé d'intégrer l'unité logique serveur 10 et ses registres 12 dans une puce mémoire sans pénalité significative en termes de surface occupée. En variante, l'une ou chacune des unités logiques serveur/client peut être réalisée à partir d'un processeur programmé pour exécuter les séquences de fonctionnement décrites.

L'exemple de la description, délibérément simple par souci de simplicité et de clarté, porte sur un cas de 20 bits d'adresses A0 à A19 gérées au niveau du plan mémoire, à partir de quatre lignes parallèles polyvalentes 6-1 à 6-4 en externe. Bien entendu, les enseignements permettent de gérer un nombre arbitraire de bits d'adresse avec un nombre N_{LPP} arbitraire de lignes parallèles polyvalentes en externe. Par ailleurs, le rapport entre le nombre N_{B} de bits d'adresse gérés et le nombre de lignes parallèles polyvalentes est également arbitraire. En effet, l'organisation et la configuration des registres serveur sont libres, et permettent d'accommoder toutes valeurs de N_{LPP} et N_{B} (N_{LPP} < N_{B}) indépendamment l'une de l'autre. Dans le mode de réalisation décrit, on arrive au nombre de bits gérés N_{B} en prévoyant un nombre de registres serveurs 12 individuels égal au nombre N_{LPP} de lignes parallèles polyvalentes, et en attribuant à chaque registre serveur ce même nombre N_{LPP} de lignes parallèles de mémorisation, d'où N_{B}= N_{LPP}²+N_{LPP} (soit le nombre de bits supplémentaires N_{LPP}² (=N_{SE}) gérés par le mode évolution bits poids fort + le nombre de bits gérés N_{LPP} par le mode évolution bits poids faible seulement). Sur cette même base, on peut donc gérer différentes valeurs de N_{B} suivant cette équation. D'autres valeurs N_{B}≠N_{LPP}²+N_{LPP} sont possibles selon plusieurs approches, pouvant être prises séparément ou en combinaison :
- par utilisation de registres serveurs dont un ou certains gère(nt) un nombre d'entrées parallèles inférieur à N_{LPP} défini supra,
- par utilisation de techniques combinatoires et/ou de multiplexage sur les lignes parallèles polyvalentes pour désigner un registre serveur à mettre à jour. Par exemple, les valeurs binaires présentes sur l'ensemble des lignes parallèles peuvent correspondre à un mot/nombre binaire parmi 2 puissance N_{LPP} mots/nombres possibles, chacun ou certains étant attribué(s) spécifiquement à un registre serveur particulier,
- par utilisation de techniques combinatoires et/ou de multiplexage sur les lignes parallèles polyvalentes pour charger des valeurs de bits sur les lignes parallèles de mémorisation d'un registre serveur désigné,
- etc.

Certaines de ces approches peuvent requérir un nombre de cycles plus important pour réaliser le mode évolution bits poids fort, mais permettent en contrepartie de d'utiliser un nombre plus restreint de lignes parallèles polyvalentes, ou de gérer un plus grand nombre de bits parallèles.

Bien entendu, la gestion des registres serveur et client, et le fonctionnement des unités logiques serveur et client seront adaptés de manière correspondante.

Par ailleurs, il est clair que le terme registre utilisé accommode, inter alia, tout bloc unitaire de mémorisation pouvant être sélectionné individuellement, et comportant plusieurs voies parallèles d'entrée et de sortie de données, voire même une seule voie d'entrée et de sortie de données. Matériellement, cette mémorisation et la décomposition en blocs unitaires peut se faire par différents moyens, par exemple avec un seul registre compartimenté de manière appropriée.

Dans l'ensemble de la description supra, la mémoire/le plan mémoire peut être de tout type et de toute technologie faisant appel à des entrées d'adresse parallèles : les mémoires semiconducteurs vives, connues par l'acronyme du RAM (mémoire vive) : - DRAM (mémoire vive dynamique), SRAM (mémoire vive statique), MRAM (mémoire vive à effet magnétique), etc., les mémoires programmables ou pré-programmées (connues par l'acronyme ROM) : - EEPROM (mémoire programmable électriquement), "Flash", ROM masque, etc.

La mémoire/le plan mémoire supra peut être réalisé sous forme de puce spécifique à la mémorisation, ou il peut faire partie intégrante d'un circuit comportant d'autres éléments fonctionnels, tel qu'un microcontrôleur, une interface, un ensemble de plan mémoires reliés, etc.

Par ailleurs, les principes de l'invention peuvent être utilisés en outre sur d'autres applications qu'un bus adresse. A titre indicatif, les enseignements peuvent être transposés mutatis mutandis à un bus de données, par exemple d'une mémoire. Dans ce cas, le transfert de données, en entrée ou en sortie, peut s'opérer sur un nombre restreint de lignes parallèles, à l'instar des lignes polyvalentes 6-1 à 6-1, utilisées à la fois en mode évolution de bits de poids faible seulement et en mode évolution bits de poids fort. Cette mise en oeuvre avec des lignes de données peut être avantageuse dans des applications où les données lues ou inscrites sont statistiquement fréquemment cantonnées à une plage restreinte de valeurs, pouvant être exprimé par les mêmes lignes parallèles, bien que leur étendue possible dépasse cette plage.

L'invention peut aussi être mise en oeuvre dans d'autres applications que les mémoires semiconducteurs, par exemple dans les mémoires optiques, magnétiques, etc.

L'invention a également des applications ailleurs que dans les dispositifs destinés à la mémorisation de données, pouvant servir par exemple dans le pilotage des lignes de commutation (la sélection de lignes s'effectuant par de bits d'adresse, par exemple), dans des dispositif d'affichage matriciels, etc.

Dans le cas d'une application avec des signaux optiques, chacune des lignes parallèles polyvalentes peut être une fibre optique individuelle, qui constitue alors une ligne conductrice de lumière.

## Revendications

1. Procédé pour accéder à une cellule mémoire d'un plan mémoire (2) via une adresse mémoire, l'adresse mémoire comprenant un nombre N_{B} d'un ensemble de valeurs (A0-A19) constituées sur N_{B} lignes conductrices parallèles d'un générateur d'adresses (4) au moyen d'un bus d'adresse réduit (6) comprenant un nombre N_{LPP} de lignes conductrices (6-1, 6-2 ; 6-3 ; 6-4), où NLPP est supérieur à 1 et inférieur à N_{B}, le procédé étant **caractérisé par** :
- l'association de chacun des N_{B} bits à l'un d'une pluralité de sous-ensembles de valeurs (A0 - A3, A4 - A7, A8 - A12, A13 - A15, A16 - A19), de telle sorte que chaque sous-ensemble de valeurs est associé à un nombre de bits de l'adresse mémoire qui est entre 1 et N_{LPP},
- la transmission sur au moins l'une des lignes conductrices (6-1, 6-2 ; 6-3 ; 6-4) d'un signal logique indiquant la transmission du premier sous-ensemble (A4-A7) de l'adresse mémoire,
- la transmission du premier sous-ensemble de valeurs (A4-A7) en parallèle sur les lignes conductrices (6-1-6-4) à l'un d'une pluralité de moyens de mémorisation intermédiaires (12), chacun configuré pour mémoriser une partie des N_{B} bits (A0-A19) correspondant à l'un des sous-ensembles de valeurs, et
- la fourniture au plan mémoire (2) d'au moins une partie des N_{B} bits (A0-A19) de l'adresse mémoire via un ensemble de connexions parallèles entre la pluralité de moyens de mémorisation intermédiaires (12) et le plan mémoire (2).

2. Procédé selon la revendication 1, comprenant en outre la transmission sur les lignes conductrices (6-1, 6-2 ; 6-3 ; 6-4) d'un deuxième sous-ensemble (A0-A3) des bits (A0-A19) de l'adresse mémoire, par présentation directe du deuxième sous-ensemble de valeurs (A0-A3) sur les lignes conductrices respectives (6-1-6-4) au plan mémoire (2).

3. Procédé selon la revendication 2, dans lequel le deuxième sous-ensemble de valeurs (A0-A3) de l'adresse mémoire comprend les bits de plus faibles poids de l'adresse mémoire.

4. Procédé selon l'une quelconque des la revendications 1 à 3, **caractérisé en ce qu'**il comprend les étapes suivantes :
- charger ledit premier sous-ensemble de valeurs (A4-A19) dans des moyens de mémorisation (12) selon un protocole préétabli, en utilisant les lignes conductrices (6-1-6-4),
- présenter directement le deuxième sous-ensemble de valeur(s) en utilisant des/les lignes conductrices respectives (6-1-6-4).

5. Procédé selon la revendication 4, **caractérisé en ce qu'**il comprend une gestion des moyens de mémorisation (12) par blocs (12-1-12-4) d'au moins une valeur, et comprend en outre les étapes de :
- déterminer, pour chaque bloc, si la/chaque valeur déjà mémorisée (Ai) est égale à la valeur qui doit correspondre dans l'ensemble de valeurs à constituer,
- dans l'affirmatif, maintenir le bloc en l'état, sans chargement de données,
- dans le cas contraire, charger dans le bloc la/les valeurs qui doit/doivent correspondre, au moyens de la/les ligne(s) conductrice(s) (6-1-6-4) selon le protocole préétabli, en utilisant les lignes conductrices (6-1-6-1).

6. Procédé selon l'une quelconque des revendications 4 à 5, où ledit ensemble de NB valeurs est constituée à un côté destination (10, 12) à partir de données émises d'un côté source (4, 14), relié au côté destination via lesdites lignes conductrices (6-1-6-4)/ladite ligne conductrice, **caractérisé en ce qu'**il comprend les étapes de :
- mémoriser (16), du côté source, le contenu des moyens de mémorisation (12) se situant du côté destination,
- comparer, du côté source, les valeurs (A4-A19) du premier sous-ensemble à constituer avec les valeurs correspondantes (MA4-MA19) du contenu mémorisé du côté source,
- déterminer sur la base de cette comparaison la/les valeur(s) du premier sous-ensemble reçu à transmettre au côté destination pour actualiser le contenu (A4-A19) des moyens de mémorisation (12) du côté destination.

7. Procédé selon la revendication 6, **caractérisé en ce que** le côté source (4, 14) signale au côté destination (10, 12) l'identification du/des blocs, dont le contenu doit faire l'objet d'une mise à jour, par un seul message durant un premier cycle, **en ce que** le nombre de lignes (6-1-6-4) est au moins égal au nombre de blocs de mémorisation (12-1-12-4) en lesquels sont décomposées les valeurs (A4-A19) du premier sous-ensemble, et **en ce que**, du côté source (4, 14), chaque bloc respectif est attribué à une ligne particulière selon un code de correspondance connu au niveau du côté source et du côté destination, et **en ce que** ladite désignation d'un bloc est signalée par un signal sur une ligne conductrice spécifiquement attribuée à ce bloc.

8. Procédé selon la revendication 7, **caractérisé en ce que** le côté source transmet via les lignes conductrices (6-1-6-4)/la ligne conductrice les/la valeur(s) destinée(s) à être chargée(s) dans chaque/le bloc identifié (12-i), afin d'actualiser ledit premier sous ensemble de valeurs (A4-A19), en utilisant un cycle de transmission de valeur(s) par bloc, selon un ordonnancement préétabli des cycles, par lequel le côté destination identifie le bloc destinataire de la valeur/des valeurs présente(s) sur les lignes conductrices/la ligne conductrice en fonction du cycle.

9. Procédé selon l'une quelconque des revendications 5 à 8, **caractérisé en ce qu'**une mise à jour de l'ensemble de NB valeurs (A0-A19) accessibles en parallèle est effectuée par les cycles successifs suivants :
- un premier cycle comprenant :
- l'identification par le côté source (14, 16) du/des bloc(s) (12-1-12-4) comportant au moins une valeur à changer pour la mise à jour, et
- le signalement au côté destination (10, 12), durant un premier cycle de mise à jour, du/des bloc(s) (12-1-12-4) comportant au moins une valeur à changer pour la mise à jour, au moyen des lignes conductrices parallèles (6-1-6-4)/ de la ligne conductrice,
- suivi d'un cycle pour le ou chaque bloc identifié, comprenant :
- la transmission par le côté source de la valeur/l'ensemble des valeurs destinées au bloc, au moyen des lignes conductrices parallèles (6-1-6-4)/de la ligne conductrice,
- au niveau du côté destination, le transfert et le chargement dans le bloc de mémorisation identifié, des valeurs transmises, et
- suivi d'un cycle comprenant la transmission sur les lignes conductrices parallèles (6-1-6-4)/la ligne conductrice des valeurs (A0-A3)/de la/des valeur(s) complémentaire(s) au sous-ensemble, de sorte à constituer l'ensemble complet des NB valeurs (A0-A19) accessibles en parallèle, les valeurs du sous-ensemble étant accessibles en parallèle en sortie des blocs de mémorisation (12) du côté destination, et les valeurs/la valeur complémentaire(s) au sous-ensemble étant présentée(s) directement sur les lignes conductrices respectives/la ligne conductrice.

10. Procédé selon l'une quelconque des revendications 5 à 9, **caractérisé en ce que** :
- le nombre de blocs de mémorisation (12-1-12-4) est égal au nombre NLLP de lignes conductrices parallèles (6-1-6-4), et
- le nombre de lignes de mémorisation par bloc est égal au nombre NLLP de lignes conductrices parallèles (6-1-6-4).

11. Procédé selon l'une quelconque des revendications 1 à 10, **caractérisé en ce que** lesdites NB valeurs (A0-A19) sont des éléments binaires qui constituent collectivement un nombre binaire de NB bits, et **en ce que** lesdits sous-ensembles de valeurs (A4-A19) constituent les bits les plus significatifs du nombre binaire.

12. Procédé selon l'une quelconque des revendications 1 à 11, **caractérisé en ce que** lesdites valeurs (A0-A19) de l'ensemble sont utilisées en tant qu'adresse d'une mémoire parallèle (2 ; 22).

13. Procédé selon l'une quelconque des revendications 11 ou 12, **caractérisé en ce que** lesdites lignes conductrices (6-1-6-4) constituent l'intégralité des lignes parallèles d'un bus d'adresse (6) pour transmettre le nombre binaire de NB bits.

14. Procédé selon l'une quelconque des revendications 1 à 3, dans lequel les lignes conductrices (6-1-6-4) sont accouplées à la mémoire (2) de sorte que chaque valeur du deuxième sous-ensemble de valeurs (A0-A3) de l'adresse mémoire est transmise sur une ligne respective des lignes conductrices (6-1-6-4) à la mémoire (2) en parallèle.

15. Procédé selon la revendication 14, dans lequel les lignes conductrices (6-1-6-4) sont également accouplées à une unité logique (10) qui reçoit les signaux logiques sur les lignes conductrices (6-1-6-4) et détermine au moins l'un des sous-ensembles de valeurs (A4-A19) de l'adresse mémoire en utilisant les signaux logiques reçus et transmet le au moins un sous-ensemble de valeurs déterminé (A4-A19) à la mémoire (2) via une pluralité de blocs de mémorisation (12-1-12-4).

16. Procédé selon la revendication 15, dans lequel chacun de la pluralité de blocs de mémorisation (12-1-12-4) est accouplé à la mémoire (2) via une pluralité de lignes parallèles de sorte que l'intégralité de l'ensemble de valeurs (A0-A19) de l'adresse mémoire sont transmises à la mémoire (2) sur des connexions parallèles individuelles.

17. Procédé selon la revendication 16, dans lequel la pluralité de blocs de mémorisation (12-1-12-4) est constituée de quatre blocs de mémorisation (12-1-12-4) et chacun des quatre blocs de mémorisation (12-1-12-4) gère un bloc respectif de quatre lignes parallèles qui y sont accouplées de sorte que chaque bloc de mémorisation (12-1-12-4) transmet à la mémoire (2) quatre valeurs complémentaires consécutives des sous-ensembles de valeurs (A4-A19).

18. Procédé selon la revendication 17, dans lequel chaque bloc de mémorisation (12-1-12-4) est accouplé à l'unité logique (10) via quatre lignes parallèles de sorte que l'unité logique (10) stocke quatre valeurs des sous-ensembles de valeurs déterminés (A4-A19) dans chacun des quatre blocs de mémorisation (12-1-12-4) via les lignes parallèles accouplées entre eux.

19. Procédé selon la revendication 18, comprenant en outre :
la détermination, par l'unité logique (10), de nouvelles valeurs pour les sous-ensembles de valeurs (A4-A19) sur la base de nouveaux signaux logiques reçus sur les lignes conductrices (6-1-6-4) pour éventuellement remplacer les anciennes valeurs des sous-ensembles de valeurs (A4-A19) actuellement stockées dans les blocs de mémorisation (12-1-12-4) ;
la détermination pour chaque bloc respectif de quatre lignes parallèles accouplées entre chaque bloc de mémorisation (16-1-16-4) et l'unité logique (10) de l'égalité de l'ancienne valeur pour chaque valeur actuellement stockée en son sein (Ai) à la nouvelle valeur correspondante déterminée par l'unité logique (10) ; et
si les anciennes valeurs sont égales aux nouvelles valeurs correspondantes pour l'un quelconque des blocs, le maintien de ces blocs sans charger les nouvelles valeurs.

20. Procédé selon la revendication 19, comprenant en outre, si les anciennes valeurs ne sont pas égales aux nouvelles valeurs correspondantes pour l'un quelconque des blocs, le chargement des nouvelles valeurs dans ces blocs.

## Patentansprüche

1. Verfahren zum Zugreifen auf eine Speicherzelle einer Speicherebene (2) über eine Speicheradresse, wobei die Speicheradresse eine Anzahl N_{B} einer Wertemenge (A0 bis A19) umfasst, die auf N_{B} parallelen Leiterbahnen eines Adressengenerators (4) anhand eines eingeschränkten Adressbusses (6), der eine Anzahl N_{LPP} Leiterbahnen (6-1, 6-2; 6-3; 6-4) umfasst, gebildet wird, wobei N_{LPP} größer als 1 und kleiner als N_{B} ist, wobei das Verfahren **gekennzeichnet ist durch**:
- die Verknüpfung jedes der N_{B} Bits mit einer von einer Vielzahl von Werteteilmengen (A0 bis A3, A4 bis A7, A8 bis A12, A13 bis A15, A16 bis A19), so dass jede Werteteilmenge mit einer Bitanzahl der Speicheradresse verknüpft ist, die zwischen 1 und N_{LPP} liegt,
- die Übertragung auf mindestens einer der Leiterbahnen (6-1, 6-2; 6-3; 6-4) eines logischen Signals, das die Übertragung der ersten Teilmenge (A4 bis A7) der Speicheradresse angibt,
- die Übertragung der ersten Werteteilmenge (A4 bis A7) parallel auf den Leiterbahnen (6-1 bis 6-4) an eines von einer Vielzahl von Zwischenspeichermitteln (12), die jeweils konfiguriert sind, um einen Teil der N_{B} Bits (A0 bis A19) zu speichern, der einer der Werteteilmengen entspricht, und
- die Bereitstellung für die Speicherebene (2) mindestens eines Teils der N_{B} Bits (A0 bis A19) der Speicheradresse über eine Menge paralleler Verbindungen zwischen der Vielzahl von Zwischenspeichermitteln (12) und der Speicherebene (2).

2. Verfahren nach Anspruch 1, ferner umfassend die Übertragung auf den Leiterbahnen (6-1, 6-2; 6-3; 6-4) einer zweiten Teilmenge (A0 bis A3) der Bits (A0 bis A19) der Speicheradresse, indem die zweite Werteteilmenge (A0 bis A3) auf den jeweiligen Leiterbahnen (6-1 bis 6-4) der Speicherebene (2) direkt vorgelegt wird.

3. Verfahren nach Anspruch 2, wobei die zweite Werteteilmenge (A0 bis A3) der Speicheradresse die niedrigstwertigen Bits der Speicheradresse umfasst.

4. Verfahren nach einem der Ansprüche 1 bis 3, **dadurch gekennzeichnet, dass** es die folgenden Schritte umfasst:
- Laden der ersten Werteteilmenge (A4 bis A19) in Speichermittel (12) gemäß einem vorgegebenen Protokoll unter Verwendung der Leiterbahnen (6-1 bis 6-4),
- direktes Vorlegen der zweiten Teilmenge von einem Wert oder mehreren Werten unter Verwendung von (den) jeweiligen Leiterbahnen (6-1 bis 6-4).

5. Verfahren nach Anspruch 4, **dadurch gekennzeichnet, dass** es eine Handhabung der Speichermittel (12) in Blöcken (12-1 bis 12-4) aus mindestens einem Wert umfasst und ferner die folgenden Schritte umfasst:
- Bestimmen für jeden Block, ob der/jeder bereits gespeicherte Wert (Ai) gleich dem Wert ist, welcher der zu bildenden Wertemenge entsprechen soll,
- wenn ja, Beibehalten des Blocks ohne Daten zu laden,
- andernfalls Laden in den Block des Wertes bzw. der Werte, der bzw. die entsprechen soll(en), anhand der Leiterbahn(en) (6-1 bis 6-4) gemäß dem vorgegebenen Protokoll, unter Verwendung der Leiterbahnen (6-1 bis 6-1).

6. Verfahren nach einem der Ansprüche 4 bis 5, wobei die Menge aus NB Werten auf einer Zielseite (10, 12) aus Daten gebildet wird, die von einer Ursprungsseite (4, 14) gesendet werden, die mit der Zielseite über die Leiterbahnen (6-1 bis 6-4)/ die Leiterbahn verbunden ist, **dadurch gekennzeichnet, dass** es die folgenden Schritte umfasst:
- Speichern (16) auf der Ursprungsseite des Inhalts der Speichermittel (12), die sich auf der Zielseite befinden,
- Vergleichen auf der Ursprungsseite der Werte (A4 bis A19) der ersten Teilmenge, die mit den entsprechenden Werten (MA4 bis MA19) des Inhalts, der auf der Ursprungsseite gespeichert ist, zu bilden ist,
- Bestimmen auf der Grundlage dieses Vergleichs des Wertes bzw. der Werte der ersten empfangenen Teilmenge, die an die Zielseite zu übertragen ist, um den Inhalt (A4 bis A19) der Speichermittel (12) auf der Zielseite zu aktualisieren.

7. Verfahren nach Anspruch 6, **dadurch gekennzeichnet, dass** die Ursprungsseite (4, 14) der Zielseite (10, 12) die Identifizierung des Blocks/ der Blöcke, dessen bzw. deren Inhalt Gegenstand einer Aktualisierung sein soll, durch eine einzige Nachricht während eines ersten Zyklus meldet, dass die Anzahl der Linien (6-1 bis 6-4) mindestens gleich der Anzahl von Speicherblöcken (12-1 bis 12-4) ist, in welche die Werte (A4 bis A19) der ersten Teilmenge aufgegliedert werden, und dass auf der Ursprungsseite (4, 14) jeder jeweilige Block gemäß einem Entsprechungscode, der auf der Ursprungsseite und auf der Zielseite bekannt ist, einer bestimmten Bahn zugewiesen wird, und dass die Bezeichnung eines Blocks durch ein Signal auf einer Leiterbahn, die insbesondere diesem Block zugewiesen ist, gemeldet wird.

8. Verfahren nach Anspruch 7, **dadurch gekennzeichnet, dass** die Ursprungsseite über die Leiterbahnen (6-1 bis 6-4)/die Leiterbahn den Wert oder die Werte überträgt, der bzw. die dazu gedacht ist bzw. sind, in jeden/ den identifizierten Block (12-i) geladen zu werden, um die erste Werteteilmenge (A4 bis A19) unter Verwendung eines Zyklus zum Übertragen eines Wertes oder mehrerer Werte pro Block gemäß einer vorgegebenen Organisation der Zyklen, wodurch die Zielseite den Zielblock des Wertes/ der Werte identifiziert, der bzw. die auf den Leiterbahnen/ der Leiterbahn in Abhängigkeit von dem Zyklus vorliegt bzw. vorliegen, zu aktualisieren.

9. Verfahren nach einem der Ansprüche 5 bis 8, **dadurch gekennzeichnet, dass** eine Aktualisierung der Menge von NB Werten (A0 bis A19), die parallel zugänglich sind, durch die folgenden aufeinanderfolgenden Zyklen erfolgt:
- einen ersten Zyklus, der Folgendes umfasst:
- die Identifizierung durch die Ursprungsseite (14, 16) des Blocks/ der Blöcke (12-1 bis 12-4), der bzw. die mindestens einen Wert, der für die Aktualisierung zu ändern ist, umfasst bzw. umfassen, und
- die Meldung an die Zielseite (10, 12) während eines ersten Aktualisierungszyklus des Blocks/ der Blöcke (12-1 bis 12-4), der bzw. die mindestens einen Wert, der für die Aktualisierung zu ändern ist, umfasst bzw. umfassen, anhand der parallelen Leiterbahnen (6-1 bis 6-4)/ der Leiterbahn,
- gefolgt von einem Zyklus für den oder jeden identifizierten Block, umfassend:
- die Übertragung durch die Ursprungsseite des Wertes/aller Werte, die für den Block bestimmt sind, anhand der parallelen Leiterbahnen (6-1 bis 6-4)/ der Leiterbahn,
- auf der Zielseite das Übertragen und das Laden der übertragenen Werte in den identifizierten Speicherblock, und
- gefolgt von einem Zyklus, der die Übertragung auf den parallelen Leiterbahnen (6-1 bis 6-4)/ der Leiterbahn der Werte (A0 bis A3) des Wertes/ der Werte, der bzw. die die Teilmenge ergänzt bzw. ergänzen, umfasst, um die vollständige Menge der NB Werte (A0 bis A19), die parallel zugänglich sind, zu bilden, wobei die Werte der Teilmenge am Ausgang der Speicherblöcke (12) der Zielseite parallel zugänglich sind, und wobei der Wert/ die Werte, der bzw. die die Teilmenge ergänzt bzw. ergänzen, direkt auf den jeweiligen Leiterbahnen/der Leiterbahn vorgelegt wird bzw. werden.

10. Verfahren nach einem der Ansprüche 5 bis 9, **dadurch gekennzeichnet, dass**:
- die Anzahl von Speicherblöcken (12-1 bis 12-4) gleich der Anzahl NLLP von parallelen Leiterbahnen (6-1 bis 6-4) ist, und
- die Anzahl von Speicherbahnen pro Block gleich der Anzahl NLLP von parallelen Leiterbahnen (6-1 bis 6-4) ist.

11. Verfahren nach einem der Ansprüche 1 bis 10, **dadurch gekennzeichnet, dass** die NB Werte (A0 bis A19) Binärelemente sind, die zusammen eine Binärzahl mit NB Bits bilden, und dass die Werteteilmengen (A4 bis A19) die höchstwertigen Bits der Binärzahl bilden.

12. Verfahren nach einem der Ansprüche 1 bis 11, **dadurch gekennzeichnet, dass** die Werte (A0 bis A19) der Menge als Adresse eines parallelen Speichers (2; 22) verwendet werden.

13. Verfahren nach einem der Ansprüche 11 oder 12, **dadurch gekennzeichnet, dass** die Leiterbahnen (6-1 bis 6-4) die Gesamtheit der parallelen Bahnen eines Adressbusses (6) bilden, um die Binärzahl aus NB Bits zu übertragen.

14. Verfahren nach einem der Ansprüche 1 bis 3, wobei die Leiterbahnen (6-1 bis 6-4) mit dem Speicher (2) gekoppelt sind, so dass jeder Wert der zweiten Werteteilmenge (A0 bis A4) der Speicheradresse auf einer jeweiligen Bahn der Leiterbahnen (6-1 bis 6-4) an den Speicher (2) parallel übertragen wird.

15. Verfahren nach Anspruch 14, wobei die Leiterbahnen (6-1 bis 6-4) auch mit einer logischen Einheit (10) gekoppelt sind, welche die logischen Signale auf den Leiterbahnen (6-1 bis 6-4) empfängt und mindestens eine der Werteteilmengen (A4 bis A19) der Speicheradresse bestimmt, indem sie die empfangenen logischen Signale verwendet und die mindestens eine bestimmte Werteteilmenge (A4 bis A19) über eine Vielzahl von Speicherblöcken (12-1 bis 12-4) an den Speicher (2) überträgt.

16. Verfahren nach Anspruch 15, wobei jeder der Vielzahl von Speicherblöcken (12-1 bis 12-4) mit dem Speicher (2) über eine Vielzahl von parallelen Bahnen gekoppelt ist, so dass die Gesamtheit der Wertemenge (A0 bis A19) der Speicheradresse an den Speicher (2) auf einzelnen parallelen Verbindungen übertragen wird.

17. Verfahren nach Anspruch 16, wobei die Vielzahl von Speicherblöcken (12-1 bis 12-4) aus vier Speicherblöcken (12-1 bis 12-4) besteht und jeder der vier Speicherblöcke (12-1 bis 12-4) einen jeweiligen Block aus vier parallelen Bahnen handhabt, die damit gekoppelt sind, so dass jeder Speicherblock (12-1 bis 12-4) vier aufeinanderfolgende, ergänzende Werte der Werteteilmengen (A4 bis A19) an den Speicher (2) überträgt.

18. Verfahren nach Anspruch 17, wobei jeder Speicherblock (12-1 bis 12-4) mit der logischen Einheit (10) über vier parallele Bahnen gekoppelt ist, so dass die logische Einheit (10) vier Werte der bestimmten Werteteilmengen (A4 bis A19) in jedem der vier Speicherblöcke (12-1 bis 12-4) über die parallelen Bahnen, die dazwischen gekoppelt sind, speichert.

19. Verfahren nach Anspruch 18, ferner umfassend:
- die Bestimmung durch die logische Einheit (10) von neuen Werten für die Werteteilmengen (A4 bis A19) auf der Grundlage neuer logischer Signale, die auf den Leiterbahnen (6-1 bis 6-4) empfangen werden, um gegebenenfalls die alten Werte der Werteteilmengen (A4 bis A19) zu ersetzen, die derzeit in den Speicherblöcken (12-1 bis 12-4) gespeichert sind;
- die Bestimmung für jeden jeweiligen Block aus vier parallelen Bahnen, die zwischen jedem Speicherblock (16-1 bis 16-4) und der logischen Einheit (10) gekoppelt sind, der Gleichheit des alten Wertes für jeden derzeit darin gespeicherten Wert (Ai) mit dem entsprechenden neuen Wert, der von der logischen Einheit (10) bestimmt wird; und
wenn die alten Werte für einen der Blöcke gleich den entsprechenden neuen Werten sind, das Behalten dieser Blöcke, ohne die neuen Werte zu laden.

20. Verfahren nach Anspruch 19, das, wenn die alten Werte nicht gleich den entsprechenden neuen Werten sind, ferner für einen der Blöcke das Laden der neuen Werte in diese Blöcke umfasst.

## Claims

1. A method for accessing a memory cell of a memory array (2) via a memory address, the memory address comprising a number N_{B} of a set of values (A0-A19) formed on N_{B} parallel conductive lines of an address generator (4) by means of a reduced address bus (6) comprising a number N_{LPP} of conductive lines (6-1, 6-2; 6-3; 6-4), where NLPP is greater than 1 and less than N_{B}, the method being **characterized by**:
- the association of each of the N_{B} bits with one of a plurality of subsets of values (A0 - A3, A4 - A7, A8 - A12, A13 - A15, A16 - A19), such that each subset of values is associated with a number of bits of the memory address that is between 1 and N_{LPP},
- the transmission on at least one of the conductive lines (6-1, 6-2; 6-3; 6-4) of a logic signal indicating the transmission of the first subset (A4-A7) of the memory address,
- the transmission of the first subset of values (A4-A7) in parallel on the conductive lines (6-1-6-4) to one of a plurality of intermediate storage means (12), each configured to store a portion of the N_{B} bits (A0-A19) corresponding to one of the subsets of values, and
- the supplying to the memory array (2) of at least a portion of the N_{B} bits (A0-A19) of the memory address via a set of parallel connections between the plurality of intermediate storage means (12) and the memory array (2).

2. The method according to claim 1, further comprising the transmission on the conductive lines (6-1, 6-2; 6-3; 6-4) of a second subset (A0-A3) of the bits (A0-A19) of the memory address, by direct presentation of the second subset of values (A0-A3) on the respective conductive lines (6-1-6-4) to the memory array (2).

3. The method according to claim 2, in which the second subset of values (A0-A3) of the memory address comprises the least significant bits of the memory address.

4. The method according to any one of claims 1 to 3, **characterized in that** it comprises the following steps:
- loading said first subset of values (A4-A19) into storage means (12) according to a preset protocol, using the conductive lines (6-1-6-4),
- directly presenting the second subset of value(s) using (the) respective conductive lines (6-1-6-4).

5. The method according to claim 4, **characterized in that** it comprises a management of the storage means (12) in blocks (12-1-12-4) of at least one value, and further comprises the steps of:
- determining, for each block, whether the/each value already stored (Ai) is equal to the value that should correspond in the set of values to be formed,
- if so, maintaining the block in the present state, without any loading of data,
- if not, loading into the block the value (s) that should correspond, by means of the conductive line(s) (6-1-6-4) and according to the preset protocol, using the conductive lines (6-1-6-1).

6. The method according to any one of claims 4 to 5, in which said set of NB values is formed at a destination side (10, 12) from data transmitted from a source side (4, 14), connected to the destination side via said conductive lines (6-1-6-4)/said conductive line, **characterized in that** it comprises the steps of:
- storing (16), on the source side, the contents of the storage means (12) located on the destination side,
- comparing, on the source side, the values (A4-A19) of the first subset to be formed with the corresponding values (MA4-MA19) of the contents stored on the source side,
- determining, on the basis of this comparison, the value(s) of the first subset received to be transmitted to the destination side in order to update the contents (A4-A19) of the storage means (12) on the destination side.

7. The method according to claim 6, **characterized in that** the source side (4, 14) signals to the destination side (10, 12) the identification of the block(s) in which the content is to be updated, by a single message during a first cycle, **in that** the number of lines (6-1-6-4) is at least equal to the number of storage blocks (12-1-12-4) in which the values (A4-A19) of the first subset are broken down, and **in that**, on the source side (4, 14), each respective block is allocated to a particular line according to a correspondence code that is known on the source side and on the destination side, and **in that** said designation of a block is signaled by a signal on a conductive line specifically allocated to said block.

8. The method according to claim 7, **characterized in that** the source side transmits via the conductive lines (6-1-6-4)/the conductive line the value(s) intended to be loaded into each/the identified block (12-i), in order to update said first subset of values (A4-A19), using one value transmission cycle per block, according to a preset order of the cycles, by which the destination side identifies the destination block for the value(s) present on the conductive line(s) depending on the cycle.

9. The method according to any one of claims 5 to 8, **characterized in that** an updating of the set of NB values (A0-A19) accessible in parallel is carried out by the following successive cycles:
- a first cycle comprising:
- the identification, by the source side (14, 16), of the block(s) (12-1-12-4) including at least one value to be changed for the update, and
- the signaling to the destination side (10, 12), during a first update cycle, of the block(s) (12-1-12-4) including at least one value to be changed for the update, by means of the parallel conductive lines (6-1-6-4)/the conductive line,
- followed by a cycle for the or each block identified, comprising:
- the transmission, by the source side, of the value/the set of values destined for the block, by means of the parallel conductive lines (6-1-6-4)/the conductive line,
- at the destination side, the transfer and loading of the transmitted values into the identified storage block, and
- followed by a cycle comprising the transmission, on the parallel conductive lines (6-1-6-4)/the conductive line, of the values (A0-A3)/the value(s) complementary to the subset, so as to form the full set of NB values (A0-A19) accessible in parallel, the values of the subset being accessible in parallel at the output of the storage blocks (12) on the destination side, and the value(s) complementary to the subset being presented directly on the respective conductive lines/the conductive line.

10. The method according to any one of claims 5 to 9, **characterized in that**:
- the number of storage blocks (12-1-12-4) is equal to the number NLLP of parallel conductive lines (6-1-6-4), and
- the number of storage lines per block is equal to the number NLPP of parallel conductive lines (6-1-6-4).

11. The method according to any one of claims 1 to 10, **characterized in that** said NB values (A0-A19) are binary elements which collectively form a binary number of NB bits, and **in that** said subsets of values (A4-A19) constitute the most significant bits of the binary number.

12. The method according to any one of claims 1 to 11, **characterized in that** said values (A0-A19) of the set are used as an address of a parallel memory (2; 22).

13. The method according to any one of claims 11 or 12, **characterized in that** said conductive lines (6-1-6-4) constitute all the parallel lines of an address bus (6) for transmitting the binary number of NB bits.

14. The method according to any one of claims 1 to 3, in which the conductive lines (6-1-6-4) are connected to the memory (2) in such a way that each value of the second subset of values (A0-A3) of the memory address is transmitted on a respective line of the conductive lines (6-1-6-4) to the memory (2) in parallel.

15. The method according to claim 14, in which the conductive lines (6-1-6-4) are also connected to a logic unit (10) which receives the logic signals on the conductive lines (6-1-6-4) and determines at least one of the subsets of values (A4-A19) of the memory address using the logic signals received and transmits the at least one determined subset of values (A4-A19) to the memory (2) via a plurality of storage blocks (12-1-12-4).

16. The method according to claim 15, in which each of the plurality of storage blocks (12-1-12-4) is connected to the memory (2) via a plurality of parallel lines so that the whole of the set of values (Δ0-A19) of the memory address is transmitted to the memory (2) on individual parallel connections.

17. The method according to claim 16, in which the plurality of storage blocks (12-1-12-4) consists of four storage blocks (12-1-12-4) and each of the four storage blocks (12-1-12-4) manages a respective block of four parallel lines which are connected thereto so that each storage block (12-1-12-4) transmits to the memory (2) four consecutive complementary values of the subsets of values (A4-A19).

18. The method according to claim 17, in which each storage block (12-1-12-4) is connected to the logic unit (10) via four parallel lines so that the logic unit (10) stores four values of the determined subsets of values (A4-A19) in each of the four storage blocks (12-1-12-4) via the parallel lines connected between them.

19. The method according to claim 18, further comprising:
- the determination, by the logic unit (10), of new values for the subsets of values (A4-A19) on the basis of new logic signals received on the conductive lines (6-1-6-4) in order optionally to replace the old values of the subsets of values (A4-A19) presently stored in the storage blocks (12-1-12-4);
- the determination, for each respective block of four parallel lines connected between each storage block (16-1-16-4) and the logic unit (10), of the equality of the old value for each value presently stored therein (Ai) to the corresponding new value determined by the logic unit (10); and
- if the old values are equal to the corresponding new values for any one of the blocks, maintaining these blocks without loading the new values.

20. The method according to claim 19, further comprising, if the old values are not equal to the corresponding new values for any one of the blocks, the loading of the new values into these blocks.
